# EUROPÄISCHE PATENTSCHRIFT

(11) **EP 2 086 694 B1**
(45) Veröffentlichungstag und Bekanntmachung des Hinweises auf die Patenterteilung: **10.05.2017**
(21) Anmeldenummer: 07817777.1
(22) Anmeldetag: 05.11.2007
(51) Int. Cl.: C09D 163/00, B05D 5/08, C09D 7/12, C08K 3/22, C08K 3/34, C08L 23/06

(54) **GROßWALZE**
LARGE ROLLER
GRAND ROULEAU

(30) Priorität: 03.11.2006 DE 102006052249
(43) Veröffentlichungstag der Anmeldung: 12.08.2009
(73) Patentinhaber: Richter, Dirk, 52349 Düren (DE)
(72) Erfinder: PLUTA, Christian, 41063 Mönchengladbach (DE); RICHTER, Dirk, 52349 Düren (DE)
(74) Vertreter: Reuther, Martin
(86) Internationale Anmeldenummer: PCT/DE2007/001989
(87) Internationale Veröffentlichungsnummer: WO 2008/052540

(56) Entgegenhaltungen:
- EP-A- 0 562 191
- EP-A- 0 737 567
- EP-A- 1 674 535
- EP-A- 1 752 227
- EP-A1- 1 584 666
- WO-A-81/01149
- WO-A-90/15109
- WO-A-03/052014
- WO-A-2008/043350
- WO-A1-03/037593
- DE-A1- 3 939 704
- DE-A1- 19 514 432
- DATABASE WPI Week 199116 Derwent Publications Ltd., London, GB; AN 1991-115464 XP002481683 & SU 1 564 171 A (POLIMERKLEI IND RES) 15. Mai 1990 (1990-05-15)

## Beschreibung

Die Erfindung betrifft eine Großwalze nach dem Oberbegriff des Anspruch 1.

Hierbei sind in Antihaftbeschichtungen allgemein als Antihaftpartikel feste Zuschlagstoffe, wie beispielsweise PTFE, hexagonales Bornitrid, Graphit oder ähnliches in einen thermoplastischen Kunststoff eingelagert, welcher seinerseits von einem Gerüst, beispielsweise aus gesinterter Bronze, getragen wird.

Beschichtungen sind beispielsweise aus der WO 81/01149A1, aus der EP 0 562 191 A2, aus der EP 0 737 567 A1, aus der EP 1 674 535 A1, aus der WO 03/052014 A1, aus der WO 90/15109 A1, aus der DE 39 39 704 A1, aus der SU 1 564 171 A1 und aus der DE 195 14 432 A1 bekannt. Insbesondere die WO 90/15109 A1 offenbart eine 500 µm bis 600 µm dicke Antihaftbeschichtung mit eingelagertem Siliziumcarbid als Hartstoffpartikeln und eingelagertem PTFE/PE-Wachs als Antihaftpartikeln.

Es ist Aufgabe vorliegender Erfindung, eine mit einer Antihaftbeschichtung beschichtet Großwalze bereitzustellen, welche auch unter Last eine sehr hohe Schichtdicke erlaubt.

Als Lösung wird eine Großwalze mit den Merkmalen des Anspruchs 1 vorgeschlagen.

Insbesondere können in einer duroplastischen Kunststoffmatrix Antihaftpartikel eingelagert sein.

Bei einer derartig ausgestalteten Kunststoffmatrix weist die Kunststoffmatrix in Abweichung zum Stand der Technik eine verhältnismäßig hohe Stabilität auf, so dass auf ein in sich tragfähiges, ergänzendes Gerüst, wie beispielsweise eine Bronzesinterung oder ähnliches, verzichtet werden kann.

Im vorliegenden Zusammenhang bezeichnet der Begriff "duroplastische Kunststoffmatrix" eine Kunststoffmatrix, welche lediglich durch Zerstörung wieder verflüssigt bzw. entfernt werden kann. Hiervon sind insbesondere zu unterscheiden Plastomeren bzw. Thermoplasten. Hierbei kann die Kunststoffmatrix beispielsweise Polyurethane, Polyharnstoffe und/oder Epoxyde bzw. vernetzte technische Gummis umfassen.

Vorzugsweise handelt es sich bei der Kunststoffmatrix um eine vernetzte Kunststoffmatrix, in deren Netz funktionale Antihaftgruppen befindlich sind.

Es hat sich überraschenderweise herausgestellt, dass derartige funktionale Antihaftgruppen nicht nur lediglich die antihaftenden Eigenschaften der entsprechenden Kunststoffmatrix verstärken, sondern dass durch derartige funktionale Antihaftgruppen der Kunststoffmatrix eingelagerte Antihaftpartikel besser in der Kunststoffmatrix gebunden bleiben.

Auf diese Weise lässt sich demnach bei einer Antihaftbeschichtung durch eine vernetzte Kunststoffmatrix mit eingelagerten Antihaftpartikeln, in deren Netz funktionale Antihaftgruppen befindlich sind, auch unabhängig von den übrigen Merkmalen vorliegender Erfindung, die Lebensdauer einer derartigen Antihaftbeschichtung wesentlich erhöhen. Hierdurch erhöht sich einerseits die Verschleißfestigkeit und andererseits kann bei geeigneter Ausgestaltung auch die Dicke der Antihaftbeschichtung erhöht werden.

Als funktionale Antihaftgruppen können beispielsweise fluorierte funktionale Gruppen, Silizium enthaltene funktionale Gruppen und/oder funktionale Kohlenwasserstoffgruppen vorgesehen sein, wobei im vorliegenden Zusammenhang unter dem Begriff "funktionale Gruppe" sämtliche Atomgruppen in der Kunststoffmatrix bezeichnet werden, welche deren Stoffeigenschaften und das Reaktionsverhalten maßgeblich bestimmen. Dementsprechend bezeichnen funktionale Antihaftgruppen funktionale Gruppen, welche der sie aufweisenden Kunststoffmatrix im Bereich der funktionalen Gruppe weniger adhäsive Eigenschaften verleihen als die übrigen Bereiche der Kunststoffmatrix.

Wie bereits vorstehend angedeutet, können bei geeigneter Ausgestaltung die funktionalen Antihaftgruppen mit eingelagerten Antihaftpartikeln wechselwirken. Insoweit es sich um eine chemische Verbindung handelt, werden die Antihaftpartikel an sich zu funktionalen Antihaftgruppen der Kunststoffmatrix der Antihaftbeschichtung. Eine derartige Sichtweise wird jedoch lediglich bei Antihaftpartikeln in atomaren Dimensionen angebracht sein, so dass dann von eingelagerten Antihaftpartikeln nicht mehr gesprochen werden kann. Diese Sichtweise ist auf einer mesoskopischen Skala, bei welcher aus antihaftenden Material bestehende Bereiche, deren Dimension größer als die mittlere freie Kettenlänge der Kunststoffmatrix ist, nicht mehr angebracht sein. Ab einer derartigen Größenordnung der antihaftenden Bereiche ist von eingelagerten Antihaftpartikeln zu sprechen, auch wenn diese über chemische Bindungen über geeignete funktionale Gruppen der Kunststoffmatrix mit dieser chemisch verbunden sind.

Andererseits ist eine chemische Verbindung zwischen den eingelagerten Antihaftpartikeln und funktionalen Gruppen der Kunststoffmatrix nicht zwingend erforderlich. Vielmehr reicht es, wenn aufgrund der funktionalen Gruppen, zu welchen bei geeigneter Ausgestaltung auch funktionale Antihaftgruppen zu zählen sind, eine Umgebung erzeugt wird, in welcher die Antihaftpartikel eher verbleiben als in den übrigen Bereichen der Kunststoffmatrix. Dieses kann beispielsweise durch Van-der-Vaalsche Kräfte bzw. adhäsive Kräfte zwischen den jeweiligen funktionalen Gruppen und den eingelagerten Antihaftpartikeln erfolgen. Ebenso sind auch andere Wechselwirkungen mit den eingelagerten Antihaftpartikeln denkbar, die vorzugsweise auch während der Vernetzungsphase bereits wirksam sind, so dass bereits während der Vernetzung geeignete Räume für die Antihaftpartikel geschaffen werden, die aufgrund der durch die funktionalen Wechselwirkungsgruppen bedingten Wechselwirkung zwischen den Antihaftpartikeln und der Kunststoffmatrix enger anliegen und somit besonders geeignete Aufbewahrungsräume für die Antihaftpartikel während der Aushärtung der Kunststoffmatrix bereit gestellt werden.

Insofern ist auch unabhängig von den vorgenannten Lösungen vorliegender Erfindung eine Antihaftbeschichtung vorteilhaft, welche sich durch eine vernetzte Kunststoffmatrix mit eingelagerten Antihaftpartikeln auszeichnet, in deren Netz funktionale Wechselwirkungsgruppen zur Wechselwirkung mit eingelagerten Antihaftpartikeln befindlich sind.

Hierbei reicht jede Wechselwirkung zwischen den Wechselwirkungsgruppen und den Antihaftpartikeln, die zu einer stärkeren Anlagerung der Antihaftpartikel im Bereich der Wechselwirkungsgruppen als in den übrigen Bereichen der Kunststoffmatrix führt, erfindungsgemäß bereits aus, wobei es keine Rolle spielt, ob diese Wechselwirkung ausschließlich während der Vernetzungsphase oder ausschließlich nach dem Vernetzen bzw. unabhängig hiervon auftritt.

Wie bereits vorstehend angedeutet, kann die Kunststoffmatrix Polyurethan bzw. Epoxydharze umfassen. Hierbei können die Antihaftpartikel vor bzw. während eines Vernetzungsvorganges beigegeben werden. Auch ist es vorteilhaft, wenn die vorstehend beschriebenen funktionalen Antihaftgruppen bzw. funktionalen Wechselwirkungsgruppen bereits in den zur Vernetzung vorgesehenen Molekülketten bzw. Makromoleküle eingebaut sind. Ebenso können diese funktionalen Gruppen im Harz oder im Härter für Epoxydharze vorgesehen sein. Dementsprechend ist es von Vorteil, wenn diese funktionalen Gruppen in Komponenten, aus denen die Kunststoffmatrix zusammengesetzt wird, bereits zuvor angelegt sind, wobei es prinzipiell auch denkbar ist, diese funktionalen Gruppen erst während oder nach der Vernetzung anzulegen, was jedoch in der Regel ungleich komplizierter ist. Da die funktionalen Antihaftgruppen bzw. die funktionalen Wechselwirkungsgruppen häufig eine Vernetzung erschweren und/oder die Stabilität der Kunststoffmatrix vermindert werden, kann es von Vorteil sein, sowohl konventionelle Vernetzungsausgangsmaterialien als auch Vernetzungsausgangsmaterialien mit funktionellen Antihaftgruppen bzw. funktionellen Wechselwirkungsgruppen vorzusehen. So ist es beispielsweise denkbar, bei Epoxydharzen eine Mischung aus konventionellen Harzen und Harzen mit Antihaftgruppen mit einem entsprechenden Härter zu vermengen.

Vorzugsweise sind in der Antihaftbeschichtung mehr als 2,5 Vol.-%, insbesondere mehr als 5 Vol.-% bzw. mehr als 10 Vol.-%, eingelagerte Antihaftpartikel in Bezug auf die gesamte Beschichtungsmasse vorgesehen. Insbesondere durch die Verwendung von Duroplasten als Kunststoffmatrix und/oder durch die Verwendung der funktionalen Antihaftgruppen oder funktionalen Wechselwirkungsgruppen lassen sich derartig hohe Volumenanteile von Antihaftpartikeln in einer Kunststoffmatrix realisieren, ohne dass die Stabilität der Antihaftbeschichtung leidet.

Auch können durch eine derartige Ausgestaltung, wie bereits vorstehend erläutert, außerordentlich hohe stabile Schichtdicken realisiert werden, so dass vorliegende Erfindung insbesondere für Antihaftbeschichtungen mit einer Schichtdicke von über 0,8 mm, vorzugsweise von über 1,0 mm oder sogar von über 1,2 mm, geeignet ist. Dementsprechend eignen sich derartige erfindungsgemäße Antihaftbeschichtungen insbesondere auch für verhältnismäßig große Objekte, wie beispielsweise Walzen bei der Papierherstellung oder sonstige Großwalzen, mit zu beschichtenden Oberflächen von mehr als 1 m². Es ist unmittelbar ersichtlich, dass bei der Beschichtung von Walzen, die 4 m oder mehr lang sind, und Durchmesser von über 30 cm aufweisen, Fertigungstechniken und Materialqualitäten aus der Feinmechanik, wie sie beispielsweise bei Drucker- oder Kopiererwalzen zu finden sind, nicht zur Anwendung kommen können. Die außerordentliche Stabilität der erfindungsgemäßen Antihaftbeschichtung ermöglicht erst deren Einsatz im Maschinenbau, insbesondere auch im schweren Maschinen- und Anlagenbau.

Vorzugsweise ist die Antihaftbeschichtung über wenigstens 50% ihrer Schichtdicke, insbesondere über wenigstens 70% oder sogar über wenigstens 80% ihrer Schichtdicke, im Wesentlichen homogen ausgebildet. In diesem Zusammenhang bezeichnet der Begriff "homogen", dass der Volumenanteil der Bestandteile senkrecht zur Oberfläche der Antihaftbeschichtung in diesem Bereich weniger als 20%, vorzugsweise weniger als 10%, variiert. Durch eine derartige Ausgestaltung unterscheidet sich diese Antihaftbeschichtung von den Antihaftbeschichtungen aus dem Stand der Technik, welche in ein Trägermaterial eingebracht werden, so dass sich äußerst inhomogene Gleitschichten ausbilden, bei denen der Anteil an Trägermaterial, wie beispielsweise Sinterbronze, in die Tiefe ständig zunimmt, während der Anteil an Gleitmaterial dementsprechend mit zunehmender Tiefe ständig abnimmt. Auf diese Weise behält die vorliegende Antihaftbeschichtung auch bei stärkerem Verschleiß ihre Materialeigenschaften im Wesentlichen bei. Ebenso ist problemlos ein Nachschleifen möglich, da bei derartigen Schichtdicken ein Materialabtrag die Materialeigenschaften ebenfalls nur unwesentlich beeinflusst. Auch hier zeigt sich überdeutlich, dass derartige Antihaftbeschichtungen, insbesondere für extreme Anforderungen an hohe Schichtdicken sowie hohe Verschleißsituationen und äußerst große antihaftenden Flächen, geeignet sind.

Die eingelagerten Antihaftpartikel, die als feste Zuschlagstoffe ausgebildet sein können, können PTFE, MoS₂, hexagonales Bornitrid, Graphit und/oder Fette bzw. sonstige feste Gleitmittel umfassen. Auch können synthetische oder natürliche Wachse vorgesehen sein. Ebenso sind flüssige bzw. fließfähige Gleitmittel bzw. Additive mit Antihafteigenschaften denkbar, wobei die einzelnen Flüssigkeitspartikel durch die Kunststoffmatrix gehalten werden, so dass eine feste Gesamtanordnung entsteht. Auch können feste bzw. flüssige Stoffe mit einer Siloxanstruktur, wie insbesondere Silikon, entsprechend zur Anwendung kommen. Hierbei können die Antihaftpartikel mikronisiert, d.h. in Größenordnungen von Mikrometern vorliegend, oder nanoskaliert, d.h. in Größenordnungen von Nanometern oder darunter vorliegend, sein.

In einer bevorzugten Ausführungsform können in die Antihaftbeschichtung Hartstoffpartikel eingelagert werden. Auf diese Weise lässt sich der Verschleiß minimieren, ohne die antihaftenden Eigenschaften zu sehr zu beeinträchtigen. Insbesondere können wenigstens 10 Vol.-%, vorzugsweise wenigstens 15 bzw. wenigstens 20 oder 30 Vol.-%, der Hartstoffpartikel Hartstoffkugeln sein. Derartige Hartstoffkugeln können beispielsweise durch Sintern, Sprühverfahren und/oder durch Einschmelzen von Hartstoffkörnern gewonnen werden. Durch die Verwendung von Hartstoffkugeln wird die Antihaftbeschichtung verhältnismäßig gutmütig und belastet ein mit ihr in Kontakt kommendes Material wesentlich geringer als wenn Hartstoffpartikel zur Anwendung kommen. Darüber hinaus hat sich herausgestellt, dass Hartstoffkugeln wesentlich stabiler in einer Kunststoffmatrix verankert werden können.

Dementsprechend können wenigstens 10 Vol.-%, vorzugsweise wenigstens 15 Vol.-% bzw. wenigstens 20 Vol.-% oder 30 Vol.-%, der Hartstoffpartikel einen Rundheitsindex > 0,05, vorzugsweise > 0,1, insbesondere > 0,15, aufweisen. Kumulativ bzw. alternativ können wenigstens 10 Vol.-%, insbesondere wenigstens 15 Vol.-% bzw. wenigstens 20 Vol.-% oder sogar wenigstens 30 Vol.-%, der Hartstoffpartikel eine Oberflächenrauhigkeit < 15%, vorzugsweise < 12%, insbesondere < 10%, des mittleren Partikeldurchmessers aufweisen. Als Maß für die Oberflächenrauhigkeit kann eine in Kugelkoordinaten oder Kreiskoordinaten ausgedrückte mittlere Rauhigkeit Rₐ bzw. gemittelte Rautiefe (10 Punkthöhe) R_{z} angesetzt werden.

Vorzugsweise ist die Dicke der Antihaftschicht zumindest viermal so groß, wie der mittlere Korndurchmesser der Hartstoffpartikel. Wie bereits vorstehend ausgeführt, sind derartige Schichtdicken, insbesondere im Maschinenbau, von Vorteil und ermöglichen ein mehrfaches Abschleifen sowie eine Konstanz der Oberflächenbeschaffenheit auch bei Verschleiß.

Die Hartstoffpartikel können insbesondere Hartmetallpartikel, Keramikpartikel und/oder Stahlpartikel umfassen.

Vorzugsweise weisen die Hartstoffpartikel eine Mohs-Härte über 4, vorzugsweise über 5, auf. Derartige harte Hartstoffpartikel führen insbesondere zu einer hervorragenden Stabilisierung der Kunststoffmatrix, insbesondere auch ohne die antihaftenden Eigenschaften wesentlich zu beeinträchtigen. Auch können bei einer derartigen Ausgestaltung die Kunststoffmatrix verhältnismäßig hart ausgebildet werden, ohne dass die Vorteile einer wesentlich höheren Elastizität der Kunststoffmatrix gegenüber den Hartstoffpartikeln verloren gehen.

Andererseits können auch weichere Hartstoffpartikel zur Anwendung kommen, insbesondere wenn auch die Kunststoffmatrix an sich weicher gewählt wird. So kann es von Vorteil sein, wenn die Kunststoffmatrix eine Shore D Härte unter 80 aufweist. Bei einer derartigen Ausgestaltung sollten dann die Hartstoffpartikel eine Shore D Härte, die über der Shore D Härte der Kunststoffmatrix liegt, aufweisen, so dass diese die Antihaftbeschichtung ausreichend stabilisieren.

Hierbei ist insbesondere zu berücksichtigen, dass Partikel bzw. Oberflächen in der Regel lediglich entweder einer Härtemessung nach Mohs oder einer Härtemessung nach Shore zugänglich sind. Bei verhältnismäßig sehr harten Partikeln liefert eine Messung nach Shore keine aussagekräftigen Ergebnisse mehr. Sind die Partikel nicht ganz sehr hart, so kann über eine Messung nach Mohs keine Differenzierung mehr getroffen werden, so dass dann Messungen nach Shore vorgenommen werden müssen.

Weitere Vorteile, Ziele und Eigenschaften vorliegender Erfindung werden anhand der nachfolgenden Beschreibung dreier Beschichtungen erläutert.

Es wurden drei Beschichtungen, die den Effekt verdeutlichen, hergestellt, wobei die folgenden Rohstoffe eingesetzt wurden:
1. Epoxydharz: Bisphenol A/F mit einem Äquivalentgewicht von 180; spez. Gew. 1,2 g/ccm
2. Epoxydharz mit Antihaftgruppen: Äquivalentgewicht 500; spez. Gew. 1,1 g/ccm
3. Härter: Isophorondiamin mit Äquivalentgewicht von 75; spez. Gew. 0,9 g/ccm
4. Hartstoff: Quarz; spez. Gew. 2,2 g/ccm
5. Kugelförmiger Hartstoff: Aluminiumoxid; spez. Gew. 3,9 g/ccm
6. Antihaftpartikel: PE-Wachs; spez. Gew. 0,9 g/ccm

| | **Beschichtung 1** | **Beschichtung 2** | **Beschichtung 3** |
|---|---|---|---|
| EP | 100 | 90 | 90 |
| EP mit Antihaftgruppen | 0 | 10 | 10 |
| Härter | 42 | 39 | 39 |
| Quarz | 50 | 50 | 50 |
| Aluminiumoxidkugeln | 10 | 10 | 10 |
| PE-Wachs | 0 | 0 | 15 |

Die Beschichtungen wurden 48 Stunden nach dem Mischen mit Aceton an der Oberfläche gereinigt und anschließend untersucht. Die mechanischen Eigenschaften wurden mittels Tabertest analysiert. Die Antihaftwirkung mittels Klebebandtest. Alle Ergebnisse sind relativ zur Beschichtung 1 zu sehen. Die Bewertung war: 1 = bester, 5 = schlechtester.

| | **Beschichtung 1** | **Beschichtung 2** | **Beschichtung 3** |
|---|---|---|---|
| Taber-Test | 1 | 1 | 1 |
| Antihaft-Effekt | 5 | 4 | 1 |

## Patentansprüche

1. Großwalze mit einer Oberfläche von mehr als 1 m², insbesondere für die Papierherstellung, und einer auf diese Oberfläche beschichteten Antihaftbeschichtung mit eingelagerten Hartstoffpartikeln, ***dadurch gekennzeichnet, dass*** die Dicke der Schicht zumindest viermal so groß ist, wie der mittlere Korndurchmesser der Hartstoffpartikel, mit einer vernetzten Kunststoffmatrix mit eingelagerten Antihaftpartikeln, wobei in dem Netz der vernetzten Kunststoffmatrix funktionale Antihaftgruppen befindlich sind, und/oder mit einer vernetzten Kunststoffmatrix mit eingelagerten Antihaftpartikeln, wobei in dem Netz der vernetzten Kunststoffmatrix funktionale Wechselwirkungsgruppen zur Wechselwirkung mit den eingelagerten Antihaftpartikeln befindlich sind, wobei die Hartstoffpartikel eine Mohs-Härte über 5 aufweisen, die Hartstoffpartikel Hartmetallpartikel und/oder Keramikpartikel umfassen und die Antihaftbeschichtung über wenigstens 50% ihrer Schichtdicke homogen ausgebildet ist.

2. Großwalze nach Anspruch 1, ***dadurch gekennzeichnet, dass*** die funktionalen Antihaftgruppen fluorierte funktionale Gruppen, Si enthaltende, insbesondere Siliconartige, funktionale Gruppen und/oder funktionale Kohlenwasserstoffgruppen umfassen.

3. Großwalze nach einem der vorstehenden Ansprüche, ***dadurch gekennzeichnet, dass*** die funktionalen Antihaftgruppen mit eingelagerten Antihaftpartikeln wechselwirken.

4. Großwalze nach einem der einem der vorstehenden Ansprüche, ***dadurch gekennzeichnet, dass*** die Kunststoffmatrix eine Shore D Härte unter 80 und die Hartstoffpartikel eine Shore D Härte, die über der Shore D Härte der Kunststoffmatrix liegt, aufweisen.

5. Großwalze nach einem der vorstehenden Ansprüche, ***gekennzeichnet durch*** eine Polyurethan, Epoxydharze, Polyharnstoffe und/oder vernetzte Gummis umfassende Kunststoffmatrix.

6. Großwalze nach einem der vorstehenden Ansprüche, ***gekennzeichnet durch*** mehr als 2,5 Vol.-% eingelagerte Antihaftpartikel.

7. Großwalze nach einem der vorstehenden Ansprüche, **gekennzeichnet durch** eine Schichtdicke von über 0,8 mm.

## Claims

1. A large roller having a surface area of more than 1 m², in particular for paper manufacture, and a non-stick coating with embedded hard particles coating said surface area, **characterized in that** the thickness of the coating is at least four times larger than the mean grain diameter of the hard particles, with a cross-linked plastic matrix with embedded non-stick particles, wherein functional non-stick groups are present in the network of the cross-linked plastic matrix and/or with a cross-linked plastic matrix with embedded non-stick particles, wherein functional interactive groups for interaction with the embedded non-stick particles are present in the network of the cross-linked plastic matrix, wherein the hard particles have a Mohs hardness of more than 5, the hard particles comprise hard metal particles and/or ceramic particles and the non-stick coating is homogeneously configured over at least 50 % of its coating thickness.

2. The large roller according to claim 1, **characterized in that** the functional non-stick groups comprise fluorinated functional groups, Si-containing, in particular silicone-like functional groups and/or functional hydrocarbon groups.

3. The large roller according to one of the preceding claims, **characterized in that** the functional non-stick groups interact with embedded non-stick particles.

4. The large roller according to one of the preceding claims, **characterized in that** the plastic matrix has a Shore D hardness of less than 80 and the hard particles have a Shore D hardness which is greater than the Shore D hardness of the plastic matrix.

5. The large roller according to one of the preceding claims, **characterized by** a plastic matrix comprising polyurethane, epoxy resin, polyurea and/or cross-linked rubbers.

6. The large roller according to one of the preceding claims, **characterized by** more than 2.5 % by volume of embedded non-stick particles.

7. The large roller according to one of the preceding claims, **characterized by** a coating thickness of more than 0.8 mm.

## Revendications

1. Grand rouleau ayant une surface de plus de 1 m², en particulier pour la fabrication de papier, et comportant un revêtement anti-adhérent plaqué sur cette surface avec des particules de matière dure intégrée, **caractérisé en ce que** l'épaisseur de la couche représente au moins quatre fois le diamètre moyen des grains des particules de matière dure, comportant une matrice de matière plastique réticulée avec des particules anti-adhérentes intégrées, sachant qu'on trouve, dans le réseau de la matrice de matière plastique réticulée, des groupes anti-adhérents fonctionnels et/ou comportant une matrice de matière plastique réticulée avec des particules anti-adhérentes intégrées, sachant qu'on trouve, dans le réseau de la matrice de matière plastique réticulée, des groupes d'interaction pour interaction avec les particules anti-adhérentes intégrées, les particules de matière dure ayant une dureté Mohs de plus de 5, les particules de matière dure contenant des particules de carbure et/ou des particules de céramique et le revêtement anti-adhérent ayant une structure homogène sur au moins 50 % de son épaisseur de couche.

2. Grand rouleau selon la revendication 1, **caractérisé en ce que** les groupes anti-adhérents fonctionnels comprennent des groupes fonctionnels fluorés, des groupes fonctionnels contenant du Si, en particulier de type silicone, et/ou des groupes hydrocarbures fonctionnels.

3. Grand rouleau selon une des revendications précédentes, **caractérisé en ce que** les groupes anti-adhérents fonctionnels interagissent avec des particules anti-adhérentes intégrées.

4. Grand rouleau selon une des revendications précédentes, **caractérisé en ce que** la matrice en matière plastique présente une dureté Shore D inférieure à 80 et les particules de matière dure présentent une dureté Shore D qui est supérieure à dureté Shore D de la matrice en matière plastique.

5. Grand rouleau selon une des revendications précédentes, **caractérisé par** une matrice en matière plastique contenant du polyuréthane, de la résine époxyde, des polyurées et/ou des caoutchoucs réticulés.

6. Grand rouleau selon une des revendications précédentes, **caractérisé par** plus de 2,5 % en volume de particules intégrées.

7. Grand rouleau selon une des revendications précédentes, **caractérisé par** une épaisseur de couche de plus de 0,8 mm.
